# EUROPÄISCHE PATENTANMELDUNG

(11) **EP 1 156 638 A1**
(43) Veröffentlichungstag der Anmeldung: **21.11.2001**
(21) Anmeldenummer: 00110453.8
(22) Anmeldetag: 16.05.2000
(51) Int. Cl.: H04M 1/00

(54) **Telefon mit Weitervermittlungsfunktion**

(71) Anmelder: SIEMENS AKTIENGESELLSCHAFT, 80333 München (DE)
(72) Erfinder: Zauner, Peter, 85540 Haar (DE); Hafner, Karlheinz, Dr., 81739 München (DE)

(57) **Zusammenfassung**

Die Erfindung betrifft ein Kommunikationsendgerät, das für den gleichzeitigen Betrieb von zwei Kommunikationsverbindungen ausgelegt ist. Erfindungsgemäß sind Mittel vorgesehen zur Weitervermittlung eines ankommenden Rufes aufgrund von Steuerbefehlen und einer übermittelten Zieladresse.

## Beschreibung

Die Erfindung betrifft ein Kommunikationsendgerät gemäß dem Oberbegriff des Patentanspruchs.

Ein solches Kommunikationsendgerät ist beispielsweise ein Telefon oder ein Komforttelefon mit Anrufbeantworter, das vorzugsweise an einem ISDN-Kommunikationsnetz angeschaltet ist. Bei den bekannten ISDN-Telefonen können über die beiden B-Kanäle gleichzeitig zwei Kommunikationsverbindungen aufgebaut werden. So kann beispielsweise über den einen Kanal ein erster Anruf auf einem Anrufbeantworter aufgezeichnet werden, während über den zweiten Kanal als Sprachverbindung ein Telefonat geführt wird.

In den Tarifmodellen von den Mobilfunkbetreibern gibt es häufig die Möglichkeit, bestimmte Rufnummern zu günstigeren Preisen anzurufen als beliebige Nummern. Solche bestimmte Nummern sind beispielsweise eine oder mehrere wählbare Vorzugsrufnummern, eine bestimmte Vorwahlrufnummer, d.h. ein bestimmter Gebiets- beziehungsweise ein bestimmter Vorwahlbereich, und ähnliches mehr.

Der Erfindung liegt die Aufgabe zugrunde, ein Kommunikationsendgerät der eingangs genannten Art derart auszubilden, so dass die Telefoniekosten zu beliebigen Rufnummern reduziert werden können.

Diese Aufgabe wird erfindungsgemäß durch die im Patentanspruch angegebenen Merkmale gelöst.

Der Erfindung liegt der Gedanke zugrunde, das Kommunikationsendgerät beziehungsweise das Telefon mit einer Weitervermittlungs-Funktion auszurüsten.

Im folgenden wird die Erfindung anhand eines Ausführungsbeispieles beschrieben. Die Bezugszeichen beziehen sich nicht auf eine Zeichnung, sondern sollen das Verständnis erleichtern.

Von einem Mobilfunkgerät beziehungsweise Handy A soll eine Verbindung zu einem Telefonanschluß C hergestellt werden. Vom Handy A aus wird dazu zuerst eine Verbindung zu einem eigenen Festnetztelefon B aufgebaut. Das eigene Festnetztelefon B liegt dabei vorzugsweise in einer Zone mit geringen Tarifgebühren. Das Telefon B ist beispielsweise ein ISDN-Telefon oder ein digitales Telefon für einen sogenannten xDsl-Anschluß (Digital Subscriber Line). Nach dem Aufbau der Verbindung vom Handy A zum Festnetztelefon B wird diesem Telefon der Wunsch nach einer Weitervermittlung signalisiert. Das Telefon B weist hierzu eine soft- und/oder hardware-mässige Steuerung auf, die neben den beinahe üblichen Funktionen wie "Umleiten" und "Aufzeichnen auf Anrufbeantworter" eine Weitervermittlung einer aktuellen Kommunikationsverbindung ermöglichen.

Die Signalisierung beziehungsweise Steuerung des Telefons B für diese Weitervermittlung geschieht beispielsweise analog zur Steuerung eines Komforttelefons mit Anrufbeantworter. Nach Annahme des eingehenden Rufes durch das Telefon B wird durch Eingabe eines DTMF-Codes am Handy A der Befehl zur Weitervermittlung mitgeteilt. Solche Codes bestehen im allgemeinen aus einem führenden Stern, einer mehrstelligen Ziffernfolge, und einer abschließenden Raute. In diesem DTMF-Code kann auch eine PIN (persönliche Identifizierungsnummer) zum Schutz vor unbefugter Benutzung eingebunden sein. An Stelle des DTMF-Codes ist auch eine Sprachsteuerung mit vorgegebenen oder frei definierbaren Codewörtern möglich.

Anschließend an den DTMF-Code wird vom Handy A zum Festnetztelefon B nach entsprechender Eingabe die gewünschte Zieladresse übermittelt. Diese Zieladresse ist die gewünschte Zielwahlrufnummer von dem gerufenen Telefon C.

Aufgrund der vorliegenden Befehle und Daten wird vom ISDN-Telefon B aus über den zweiten B-Kanal eine Verbindung zur gewünschten Zieladresse aufgebaut. Letztlich kommt durch die Weitervermittlungsfunktion des Telefons B eine Kommunikations- oder eine Datenverbindung vom Handy A zu einer Zieladresse beziehungsweise Zieltelefon C zustande.

Sowohl die gewünschte Rufnummer C als auch der für die Weitervermittlung verwendete Code können im Telefonbuch des Handys A abgespeichert sein. Durch Einfügen einer genügend langen Pause zwischen der Übermittlung des DTMF-Codes und der Zielrufnummer C kann dafür gesorgt werden, dass der Ruf vom Festnetztelefon B angenommen werden kann, bevor der Befehlscode gesendet wird. Auf die Zieladresse C kann anschließend am Handy A entweder direkt eingegeben oder aus dem Telefonbuch des Handys A ausgewählt werden. Im Telefonbuch des Handys A können auch die Nummer des Telefons B, die Pause und der Befehlscode der Zielnummer C als Präfix vorangestellt werden. Weiter kann in Mobilfunkgerät A in einem sogenannten Carrier-Telefonbuch die Nummer des Telefons B, die Pause und der Befehlscode gespeichert werden. Nach Aufruf dieses Eintrages wird die Zielwahlrufnummer C aus dem "normalen" Telefonbuch dazugespielt und der Verbindungswusch ausgegeben.

Das Telefon B weist für diese Weitervermittlungsfunktion beispielsweise Menüpunkte auf. Diese sind analog zur Menüsteuerung eines Anrufbeantworters, wie Aktivierung oder Abfrage, beziehungsweise zur Ferneinstellung von Rufumleitungen ausgebildet.

Durch Verwendung einer eigenen Mehrfachrufnummer am ISDN-Telefon B nur für die Weitervermittlung von Rufnummern kann folgendes erreicht werden:
a) ein Anruf vom Handy A löst am Telefon B kein Klingelsignal aus,
b) das Telefon B nimmt den Ruf vom Handy A sofort an,
c) es wird automatisch, also ohne explizite Übermittlung des Befehlscodes, sofort eine Verbindung über den zweiten B-Kanal zur Zieladresse C aufgebaut. Hierdurch werden die lange Pause und die Übermittlung des Befehlscodes ersetzt.

Besonders vorteilhaft ist die Verwendung einer eigenen Mehrfachrufnummer am ISDN-Telefon B in Verbindung einer voreingestellten Nummer zum Handy A. Die Einstellung am Telefon B bewirkt, daß nur Anrufe von einer bestimmten, voreingestellten Nummer, beispielsweise vom Handy A, angenommen und weitervermittelt werden. Dadurch entfällt die Notwendigkeit eines PIN-Schutzes. Diese Kombination der beiden Fälle, eigene Mehrfachrufnummer und voreingestellte Rufnummer ermöglicht eine sehr bequeme Nutzung. Die Vorteile sind:
- keine Wartezeit durch sofortige Rufannahme am Gerät B unter dieser Mehrfachrufnummer;
- keine Übermittlung einer Befehlssequenz erforderlich;
- kein PIN-Schutz erforderlich.

## Patentansprüche

1. Kommunikationsendgerät, das für den gleichzeitigen Betrieb von zwei Kommunikationsverbindungen ausgelegt ist,
**gekennzeichnet durch**
Mittel zur Weitervermittlung eines ankommenden Rufes aufgrund von Steuerbefehlen und einer übermittelten Zieladresse.

2. Kommunikationsendgerät nach Anspruch 1,
**dadurch gekennzeichnet daß**
die Steuerbefehle einer eigenen Rufnummer zugeordnet sind und durch deren Anwahl aktivierbar sind.
